# EUROPEAN PATENT APPLICATION

(11) **EP 0 866 616 A1**
(43) Date of publication of application: **23.09.1998**
(21) Application number: 97402702.1
(22) Date of filing: 12.11.1997
(51) Int. Cl.: H04N 7/173

(54) **Method of and apparatus for transmitting data**

(30) Priority: 21.03.1997 EP 97400650; 25.04.1997 PC /EP97/02110 T
(71) Applicant: CANAL+ Société Anonyme, 75711 Paris Cedex 15 (FR)
(72) Inventor: Declerck, Christophe, 28210 Senantes (FR); Chaumet, Christophe, 78180 Montigny-le-Bretonneux (FR)
(74) Representative: Cozens, Paul Dennis

(57) **Abstract**

A method of transmitting data to a receiver/decoder comprises:
transmitting first type visual and/or audio data to the receiver/decoder; and
transmitting second type reference data associated with the first type visual and/or audio data to the receiver/decoder to enable the receiver/decoder to generate further visual and/or audio data in dependence on the reference data;
   wherein the first type data and the second type data have a predetermined timing relationship.

## Description

This invention relates generally to a method of and apparatus for transmitting data, and more particularly to a method of and apparatus for transmitting data to a receiver/decoder and a transmitting and receiving system.

The advent of digital transmission systems intended primarily for broadcasting television signals, in particular but not exclusively satellite television systems, has opened up the possibility of using such systems for other purposes, such as to provide interactivity with the end user or to provide the end user with additional information.

In a first aspect, the present invention provides a method of transmitting data to a receiver/decoder, comprising:
transmitting first type visual and/or audio data to the receiver/decoder; and
transmitting second type reference data associated with the first type visual and/or audio data to the receiver/decoder to enable the receiver/decoder to generate further visual and/or audio data in dependence on the reference data;
   wherein the first type data and the second type data have a predetermined timing relationship.

The term "receiver/decoder" used herein connotes a receiver for receiving either encoded or non-encoded signals, for example, television and/or radio signals. Embodiments of such receiver/decoders may include a decoder integral with the receiver for decoding the received signals, for example, in a "set-top box" or a such a decoder functioning in combination with a physically separate receiver.

The above method can enable "armchair" shopping by the user.

In a preferred embodiment, reference data is inserted into the datastream including the visual and/or audio data of, for example, a shopping television programme. The reference data may include inter alia a product reference, the description and price of the product currently being displayed in the television programme, a representation of the product and the telephone number of a sales system for ordering the product. To purchase the product, the user presses an appropriate button on a remote controller to activate the system and place the receiver/decoder of the datastream in a "shopping mode". The reference data is extracted from the datastream by the receiver/decoder, which generates further data in dependence on the reference data and displays the further data on the television screen in the form of an overlay to the television programme. The overlay typically provides an option to the user to purchase the product; by pressing one or more further buttons on the remote controller the user may purchase the product currently being displayed in the television programme.

If the visual and/or audio data and the reference data were to fall out of synchronisation, it is possible, when the receiver/decoder enters the shopping mode, for the reference data extracted from the datastream to relate to the next product to be displayed in the television programme. Accordingly, the visual and/or audio data and the reference data have a prescribed timing relationship, so that the above problem is not encountered.

Preferably, the first type data is visual and audio data which may be displayed on a television set in the form of a television programme. However, the first type data may be audio data only for broadcast by a radio.

The visual and audio data may be associated with any aspect of a television programme. Preferably, this data represents a product advertisement and the second type data are associated with the product being advertised. Other examples include:
- a question asked in a quiz programme;
- a product advertised in an advertisement; and
- any fact or product relating to the subject matter of a television programme, such as a book written by an author or a video of a pop group.

The further visual and/or audio data may be arranged to provide the user with a selectable option, such as an option to purchase a product advertised in a product advertisement.

The respective start times for transmission of the first and second-type data may have the predetermined timing relationship. This can make the timing relationship easy to implement; by adjusting at least one of the times for (i) transmitting the visual and/or audio data, and (ii) transmitting the reference data, the reference data can be synchronised with the visual and/or audio data as required. There is no need to adjust any internal clocks in the transmitting system.

Preferably, the first and second times are the same. The reference data can be synchronised with at least part of a television programme so that it is generated only whilst that part of the television programme is to be transmitted, for example, during a question in a quiz programme or during the advertisement of a particular product in a shopping programme.

Alternatively, the broadcast supplier may wish to have a fixed delay, for example, of several seconds, between providing the video and audio signals and commencing the generation of the data associated with the television programme so that the data associated with a television programme can remain available to a user afier the end of that part of the programme.

Preferably, the method is further a method of receiving said data, further comprising receiving the first and second type data at the receiver/decoder, and generating the further visual and/or audio data in dependence on the reference data.

The further data may be generated in dependence on the reference data using a look-up table stored in the receiver/decoder.

The look-up table can be downloaded at any time prior to the transmittal of the television programme. For example, a look-up table associated with one day's listing of television programmes can be transmitted the previous day, or during a break in programme transmission.

Two clock signals may be provided, the first and second type data being transmitted at times determined by respective ones of the clock signals, the two clock signals being compared, and at least one of the times being adjusted according to the result of the comparison.

By comparing the two clock signals which determine the actual times when the first and second times occur and adjusting (delaying or advancing) at least one of the first and second times as necessary, the first and second type data can be easily synchronised.

In a second aspect, the present invention provides a method of transmitting data, comprising:
providing two clock signals;
transmitting first and second type data at times determined by respective ones of the clock signals;
comparing the two clock signals; and
adjusting at least one of the times according to the result of the comparison.

At least one of the clock signals may form part of its respective type data.

The first type data may be transmitted at a plurality of times, and a playlist of the times at which the data are to be transmitted may be generated. The playlist may be generated periodically.

In one preferred embodiment, the second type data is transmitted in dependence on the times of the playlist and the times on the playlist are adjusted according to the result of the comparison.

The reference data may be supplemented by data read from a look-up table using the reference data to enable the receiver/decoder to generate the further visual and/or audio data. This data may be read from a look-up table in the receiver/decoder to enable the receiver/decoder to generate the further visual and/or audio data.

The reference data may be extracted from the blanking interval in the first type visual and/or audio data prior to the reading of the data in the look-up table. By including the reference data in the datastream including the visual and/or audio data, the first and second type data can be automatically synchronised.

In a related aspect, the present invention provides apparatus for transmitting data to a receiver/decoder, comprising:
means for transmitting first type visual and/or audio data to the receiver/decoder and second type reference data associated with the first type visual and/or audio data to the receiver/decoder to enable the receiver/decoder to generate further visual and/or audio data in dependence on the reference data;
   wherein the transmitting means are arranged such that the first and second-type data have a predetermined timing relationship.

The transmitting means may be arranged so that the respective start times for transmission of the first and second-type data have the predetermined timing relationship.

The respective start times may be the same.

The first type data may represent a product advertisement and the second type data may be associated with the product being advertised.

The apparatus may further comprise:
means for providing two clock signals, the transmitting means being arranged to transmit the first and second type data at times determined by respective ones of the clock signals;
means for comparing the two clock signals; and
means for adjusting at least one of the times according to the result of the comparison.

In a further related aspect, the present invention provides apparatus for transmitting data, comprising:
means for providing two clock signals;
means for transmitting first and second type data at times determined by respective ones of the clock signals;
means for comparing the two clock signals; and
means for adjusting at least one of the times according to the result of the comparison.

Preferably at least one of the clock signals forms part of its respective type data.

The transmitting means may be arranged such that the first type data are transmitted at a plurality of times, and may further comprise means for generating a playlist of the times at which the first type data are to be transmitted.

The adjusting means may be arranged to adjust the times on the playlist according to the result of the comparison.

The apparatus may comprise means for extracting the reference data from the first type visual and/or audio data. If so, the transmitting means may comprise means for transmitting said first type data and means for transmitting said second type data and wherein said extracting means is located in said means for transmitting said second type data.

The apparatus may further comprise a look-up table and means for extracting data from the look-up table using the reference data to supplement the reference data to enable the receiver/decoder to generate the further visual and/or audio data.

In another related aspect, the present invention provides a transmitting and receiving system, comprising apparatus for transmitting data as set forth above and a receiver/decoder comprising means for receiving the first and second type data, and means for generating the further visual and/or audio data in dependence on the reference data.

The generating means may be arranged such that the further data are generated in dependence of the reference data using a look-up table stored in the receiver/decoder.

The receiver/decoder may further comprise means for extracting data from the look-up table using the received reference data to supplement the reference data to enable the generating means to generate the further visual and/or audio data.

The receiver/decoder may further comprise means for extracting the reference data from the blanking interval in the first type visual and/or audio data for supply to the data extracting means.

Preferred features of the present invention will now be described, purely by way of example, with reference to the accompanying drawings, in which:-
- Figure 1: shows the overall architecture of a digital television system;
- Figure 2: shows the architecture of an interactive system of the digital television system of Figure 1;
- Figure 3: is a schematic diagram of interfaces of a receiver/decoder forming part of the system of figures 1 and 2;
- Figure 4: is a schematic diagram of a remote controller used in the digital television system;
- Figure 5: shows the arrangement of files within a module downloaded into the memory of an interactive receiver/decoder;
- Figure 6: shows the overall architecture of an embodiment of the system when in its shopping mode;
- Figure 7: shows an example of various components of the MPEG-2 bitstream used in the shopping mode;
- Figure 8: shows the overall architecture of an embodiment of the synchronisation system; and
- Figure 9: shows the overall architecture of another embodiment of the synchronisation system;
- Figure 10: is a first part of a flow diagram illustrating an example of the operation of the system of figure 6;
- Figure 11: illustrates an example of a screen of the television set of the system of figure 6; and
- Figure 12: is a second part of the flow diagram shown partially in figure 10.

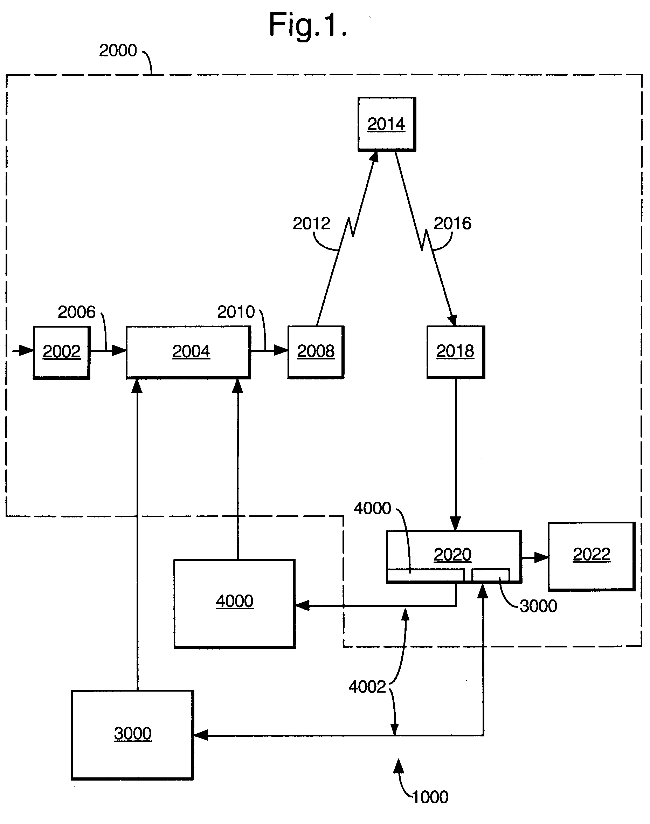

An overview of a digital television system 1000 is shown in Figure 1. The system includes a mostly conventional digital television system 2000 which uses the known MPEG-2 compression system to transmit compressed digital signals. In more detail, MPEG-2 compressor 2002 in a broadcast centre receives a digital signal stream (typically a stream of video signals). The compressor 2002 is connected to a multiplexer and scrambler 2004 by linkage 2006. The multiplexer 2004 receives a plurality of further input signals, assembles one or more transport streams and transmits compressed digital signals to a transmitter 2008 of the broadcast centre via linkage 2010, which can of course take a wide variety of forms including telecommunications links. The transmitter 2008 transmits electromagnetic signals via uplink 2012 towards a satellite transponder 2014, where they are electronically processed and broadcast via notional downlink 2016 to earth receiver 2018, conventionally in the form of a dish owned or rented by the end user. The signals received by receiver 2018 are transmitted to an integrated receiver/decoder 2020 owned or rented by the end user and connected to the end user's television set 2022. The receiver/decoder 2020 decodes the compressed MPEG-2 signal into a television signal for the television set 2022.

A conditional access system 3000 is connected to the multiplexer 2004 and the receiver/decoder 2020, and is located partly in the broadcast centre and partly in the decoder. It enables the end user to access digital television broadcasts from one or more broadcast suppliers. A smartcard, capable of deciphering messages relating to commercial offers (that is, one or several television programmes sold by the broadcast supplier), can be inserted into the receiver/decoder 2020. Using the decoder 2020 and smartcard, the end user may purchase commercial offers in either a subscription mode or a pay-per-view mode.

An interactive system 4000, also connected to the multiplexer 2004 and the receiver/decoder 2020 and again located partly in the broadcast centre and partly in the decoder, enables the end user to interact with various applications via a modemmed back channel 4002.

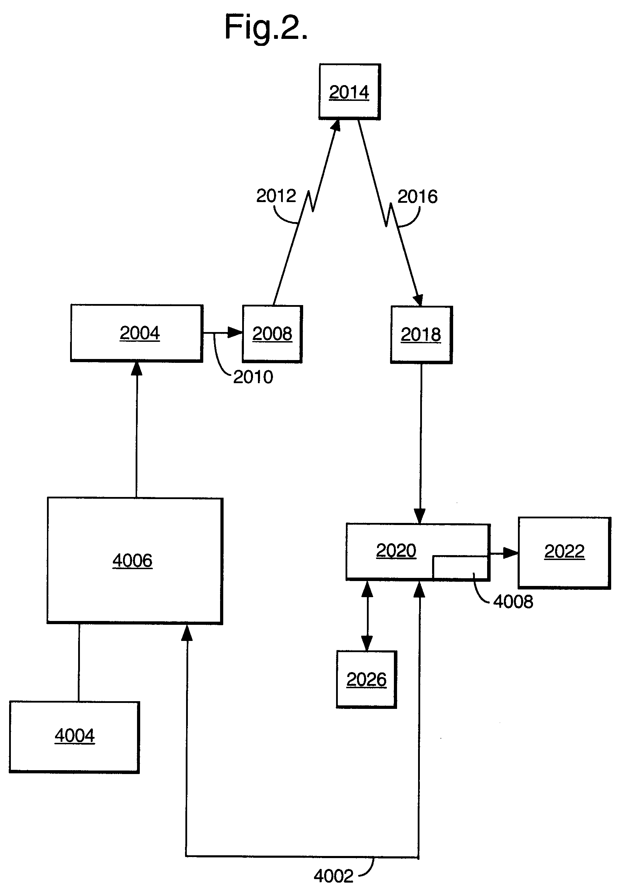

Figure 2 shows the general architecture of the interactive system 4000 of the digital television system 1000 of the present invention.

For example, the interacting system 4000 allows an end user to buy items from on-screen catalogues, consult local news and weather maps on demand and play games through their television set.

The interactive system 4000 comprises in overview four main elements:-
- an authoring tool 4004 at the broadcast centre or elsewhere for enabling a broadcast supplier to create, develop, debug and test applications;
- an application and data server 4006, at the broadcast centre, connected to the authoring tool 4004 for enabling a broadcast supplier to prepare, authenticate and format applications and data for delivery to the multiplexer and scrambler 2004 for insertion into the MPEG-2 transport stream (typically the private section thereof) to be broadcast to the end user;
- a virtual machine including a run tune engine (RTE) 4008, which is an executable code installed in the receiver/decoder 2020 owned or rented by the end user for enabling an end user to receive, authenticate, decompress, and load applications into the working memory of the decoder 2020 for execution. The engine 4008 also runs resident, general-purpose applications. The engine 4008 is independent of the hardware and operating system; and
- a modemmed back channel 4002 between the receiver/decoder 2020 and the application and data server 4006 to enable signals instructing the server 4006 to insert data and applications into the MPEG-2 transport stream at the request of the end user.

The interactive system operates using "applications" which control the functions of the receiver/decoder and various devices contained therein. Applications are represented in the engine 4008 as "resource files". A "module" is a set of resource files and data. A "memory volume" of the receiver/decoder is a storage space for modules. Modules may be downloaded into the receiver/decoder 2020 from the MPEG-2 transport stream.

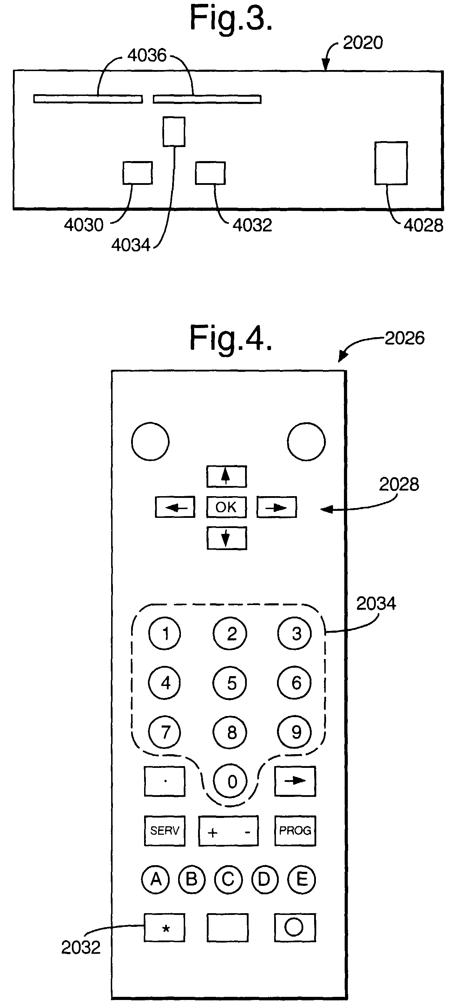

Physical interfaces of the receiver/decoder 2020 are used for downloading data. With reference to Figure 3, the decoder 2020 contains, for example, six downloading devices; MPEG flow tuner 4028, serial interface 4030, parallel interface 4032, modem 4034 and two card readers 4036.

Modem 4034 of the receiver/decoder 2020, or alternatively an external modem, such as a V34 modem capable of transferring data at up to 28.8 kbytes per second, connected to the serial interface, is connected via a telephone line to the application and data server 4006, or alternatively to a separate sales system the telephone number of which has been downloaded to the receiver/decoder 2020.

For the purposes of this specification, an application is a piece of computer code for controlling high level functions of preferably the receiver/decoder 2020. For example, when the end user positions the focus of a remote controller 2026 (as shown in more detail in figure 4) on a button object seen on the screen of the television set 2022 and presses the validation key, the instruction sequence associated with the button is run.

An interactive application proposes menus and executes commands at the request of the end user and provides data related to the purpose of the application. Applications may be either resident applications, that is, stored in the ROM (or FLASH or other non-volatile memory) of the receiver/decoder 2020, or broadcast and downloaded into the RAM (or FLASH) of the receiver/decoder 2020 by extracting the application code from the digital datastream.

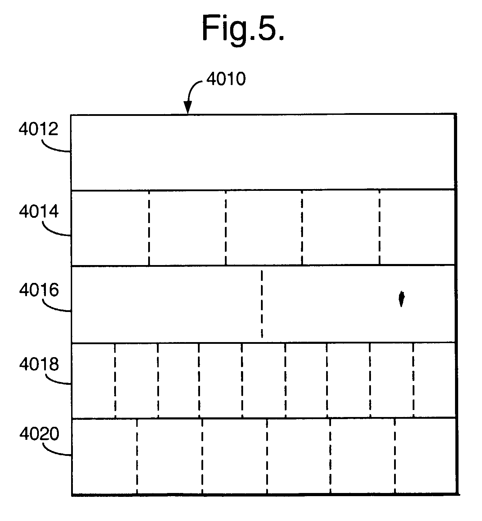

Applications are stored in memory locations in the receiver/decoder 2020 and represented as resource files and data. The resource files comprise graphic object description unit files, variables block unit files, instruction sequence files and application files. With reference to Figure 5, a module 4010, such as a shopping module, is a set of resource files and data comprising the following:
a single application file 4012;
an undetermined number of graphic object description unit files 4014;
an undetermined number of variables block unit files 4016;
an undetermined number of instruction sequence files 4018; and
   where appropriate, data files 4020 such as icon library files, image files, character font files, colour table files and ASCII text files.

The graphic object description unit files describe the screens, the man-machine interface of the application. The variables block unit files describe the data structures handled by the application. The instruction sequence files describe the processing operations of the applications. The application files provide the entry points for the applications.

The applications constituted in this way can use data files, such as the icon library files, image files, character font files, colour table files and ASCII text files. An interactive application can also obtain on-line data by effecting inputs and/or outputs.

The engine 4008 only loads into its memory those resource files it needs at a given time. These resource files are read from the graphic object description unit files, instruction sequence files and application files; variables block unit files are stored in memory following a call to a procedure for loading modules and remain locked there until a specific call to a procedure for unloading modules is made.

A shopping mode of operation of the interactive system will now be described.

A shopping application enables "armchair" shopping by the end user. Offers of goods (or services or other products) for sale are displayed on the television set 2022 via visual and/or audio data downloaded by the receiver/decoder 2020. Goods may be purchased by means of a purchase order input to the receiver/decoder 2020 by the end user.

In operation, first assume that the receiver/decoder 2020 is operating in a "television mode", that is, extracting visual and/or audio data from the datastream and supplying the extracted data to the television set 2022 for display to the end user. By pressing a button on the remote controller 2026, the end user is able to activate the shopping application, placing the receiver/decoder 2020 in a "shopping mode". When the receiver/decoder 2020 has been placed in the shopping mode, the application enables reference data included in the datastream to be extracted therefrom by the receiver/decoder 2020 for the display of further data in the form of shopping data on the screen of the television set 2022.

Offers of goods for sale are displayed on the television set 2022 via the visual and/or audio data being broadcast by a broadcast supplier (for example, a television programme broadcast on a "shopping channel" of a broadcast supplier) and being downloaded by the receiver/decoder 2020. For example, the shopping data may comprise a series of commands which cause the simultaneous display on the television screen of the television programme and an overlay, typically comprising one or more button objects in the form of icons, representing the goods currently being shown in the television programme and the purchase price.

As described later, reference data included in the MPEG bitstream is synchronised with the visual and/or audio data contained therein so that, as the goods shown in the television programme vary, the shopping data displayed on the screen varies so that the overlay is updated to represent those goods currently shown in the television programme. If the video and/or audio data and the reference data fall out of synchronisation, it is possible, when the receiver/decoder enters the shopping mode, for the reference data extracted from the datastream to relate to the next product to be displayed in the television programme.

The end user can, by pressing appropriate buttons on the remote controller 2026, focus on any desired button object of the overlay and can select that object in order to purchase one of the goods displayed in the television programme. This purchase order is received by the receiver/decoder 2020, which runs a program stored in the receiver/decoder 2020 to dial the application and data server 4006 or the separate sales system using the modem 4034. Whilst communication between the receiver/decoder 2020 and, for example, server 4006 is being established, the overlay is changed so that a message, typically in the form of an icon or an animated cartoon, is displayed on the television set 2022. Additionally, in response to a purchase order for particular goods, the application may cause the icon representative of those goods to change.

Once communication has been established, the receiver/decoder 2020 outputs this purchase order to the server 4006 via the modem. The server 4006 receives and processes this order, for example, with an order to debit the account for a credit card which has been inserted into one of the card readers 4036 of the receiver/decoder 2020.

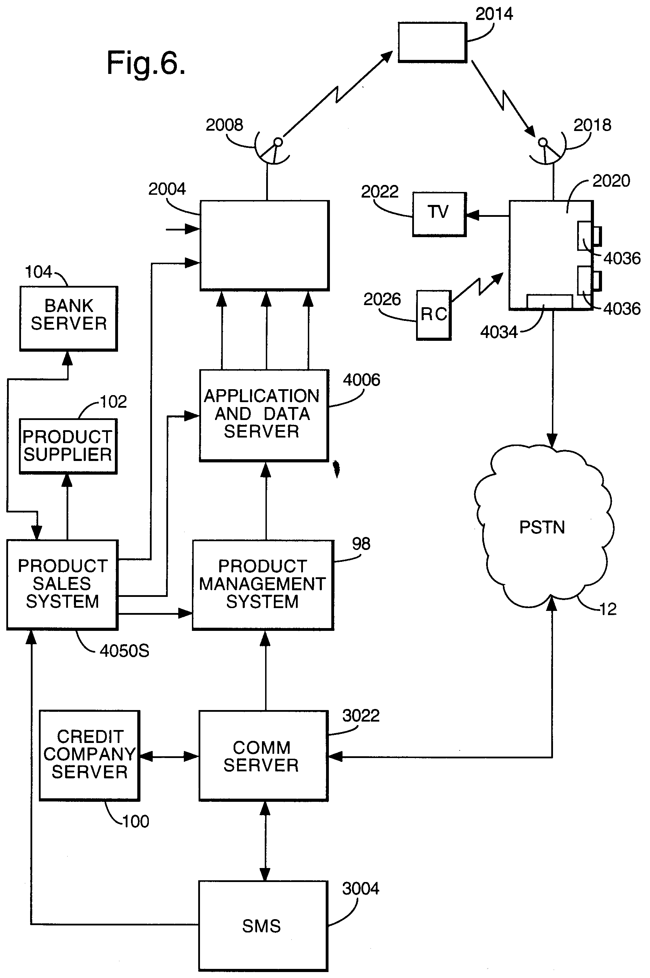

With reference to figure 6, the receiver/decoder 2020 is connectable via a public switched telephone network ("PSTN") 12 to the communications server 3022. The communications server 3022 is connectable to a subscriber management system ("SMS") 3004 and to a product management system 98 and a credit company server 100. The SMS 3004 is connectable to a product sales system 4050S, which in turn is connectable to the product management system 98, the application and data sever 4006, the multiplexer and scrambler 2004, a product supplier 102 and a bank server 104. The product management system 98 is also connectable to the application and data server.

The connection of the product sales system 4050S to the multiplexer and scrambler 2004 enables visual and/or audio data, such as a shopping television programme, to be supplied by the product sales system and integrated into the broadcast datastream.

The connection of the product sales system 4050S to the application and data server 4006 enables a playlist to be supplied from the system 4050S to the server 4006. For example, with respect to products to be advertised in a number of shopping television programmes, the playlist comprises a list of product references for the products to be advertised and the respective start times at which the programmes are to commence. The playlist can also include date information.

The playlist may relate to any number of products to be advertised over any period of time, and the product references may be in any suitable form. For instance, the playlist may comprise a list of products that are to be advertised for the period of 15 minutes starting at 10.00 a.m., as follows:
- 10.00: 3854
- 10.03: 0159
- 10.08: 5987
- 10.12: 2258

The playlist is continuously updated, and is transmitted from the system 4050S in advance of the first start time referred to therein, typically 24 hours or so beforehand.

The connection of the product sales system 4050S to the product management system 98 enables catalogue data to be supplied. The catalogue data typically includes, for each product, product data including the product reference, a title of the product, a description of the product, the price of the product and an ID for a picture of the product. The catalogue data is stored in the form of a look-up table of the product management system 98, and may be updated on a regular basis, for example, on a daily basis.

The connection of the application and data server 4006 to the multiplexer and scrambler 2004 enables:
(1) the shopping application to be transmitted to the receiver/decoder 2020;
(2) the catalogue data, in the form of a look-up table, to be transmitted to the receiver/decoder; and
(3) product data to be transmitted to the receiver/decoder 2020 in dependence with a product reference transmitted from the system 4050S.

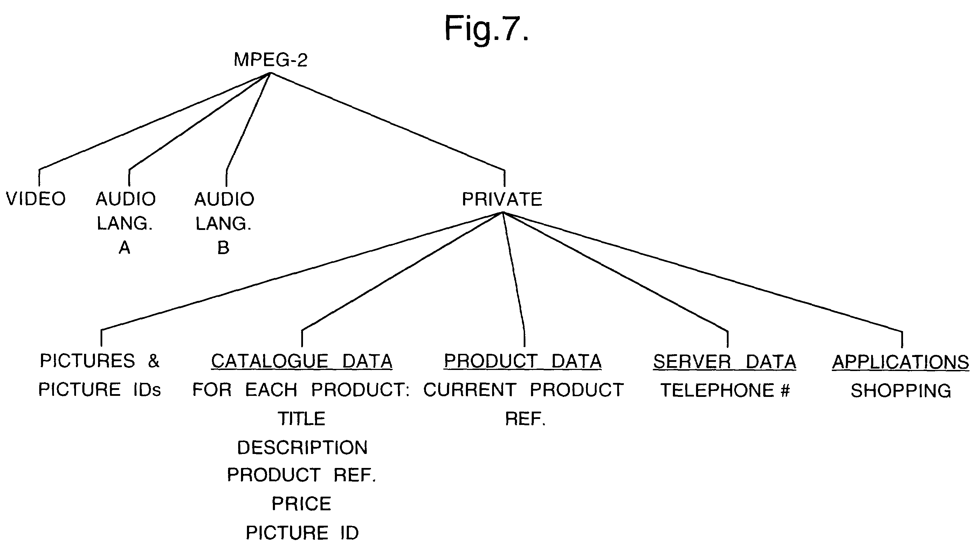

Referring now to figure 7, the above may be included, independently or in any appropriate combination, in a private section of an MPEG-2 bitstream, which may also include the telephone number of the communications server 3022, and pictures and picture IDs of the products.

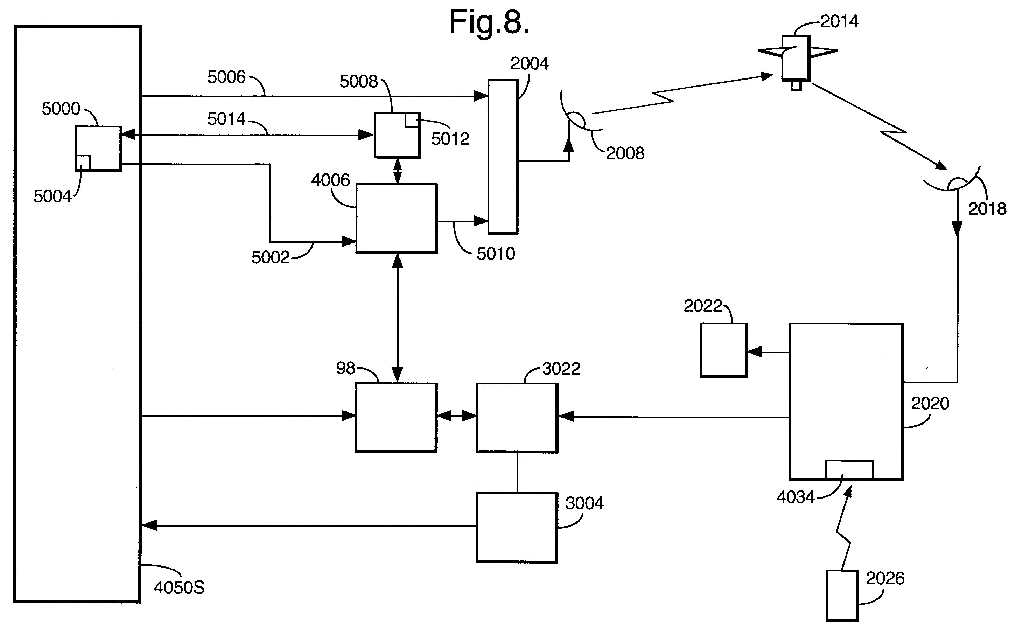

A first embodiment of a system for synchronising reference data included in a datastream with visual and/or audio data contained therein will now be described with reference to figure 8.

The product sales system 4050S includes a controller 5000, typically in the form of a personal computer. The controller 5000 is connected to the application and data server 4006 by linkage 5002 and controls the transmission of the playlist from the product sales system 4050S to the application and data server 4006. The controller 5000 includes an internal clock 5004.

The product sales system 4050S is connected to the multiplexer and scrambler 2004 by linkage 5006 which enables visual and/or audio data and typically also pictures of the products to be supplied by the product sales system and integrated into the broadcast datastream. For each visual and/or audio data associated with a product reference listed in the playlist, the product sales system 4050S commences the transmission of the visual and/or audio data at the time indicated in the playlist and as determined from the internal clock 5004.

The application and data server 4006 includes a controller 5008 for controlling the generation of typically an MPEG section containing the product data of the product currently the subject of the visual and/or audio data supplied by the product sales system 4050S to the multiplexer 2004 via linkage 5010. The product data is read from the look-up table in the product management system 98 in response to the product reference contained in the playlist. The MPEG section typically includes, as the product data, the title, description and price of that product, together with a picture ID for the picture showing the product. The controller 5008 includes an internal clock 5012, and repeatedly transmits the MPEG section, typically with a period between 200 ms and 5 seconds, to the multiplexer and scrambler 2004 from the time indicated in the received playlist and as determined by the internal clock 5012.

The multiplexer and scrambler 2004 receives the MPEG section and multiplexes the MPEG datastream comprising video and/or audio MPEG sections received from the system 4050S with that MPEG section and transmits the multiplexed datastream to the transmitter 2008. The transmitter 2008 transmits electromagnetic signals to transponder 2014 which are subsequently received by receiver 2018 and transmitted to the receiver/decoder 2020. The receiver/decoder 2020 decodes the video and/or audio MPEG sections from the received datastream into a television signal for television set 2022.

By pressing a button on the remote controller 2026, the end user is able to download (if necessary) and activate the shopping application, placing the receiver/decoder 2020 in a "shopping mode". When the receiver/decoder 2020 has been placed in the shopping mode, the shopping application enables the product data, included in the private section of the MPEG bitstream, to be extracted therefrom by the receiver/decoder 2020 for the display of shopping data on the screen of the television set 2022 in the form of an overlay, typically comprising one or more button objects in the form of icons representing the goods currently being shown in the television programme and the purchase price.

If the internal clock 5012 of the controller 5008 is synchronised with the internal clock 5004 of the controller, the product data extracted from the datastream at any time during the broadcast of visual and/or audio data will relate to that data. However, if the internal clock 5012 of the controller 5008 is not synchronised with the internal clock 5004 of the controller 5000, then the product data extracted from the datastream at any time during the broadcast of visual and/or audio data such as a shopping television programme or a question in a quiz programme may relate to such data yet to be transmitted.

In order to compensate for any time difference between the clocks 5004 and 5012, the controller 5000 of the product sales system 4050S is connected to the controller 5008 of the application and data server 406 by linkage 5014. The controller 5008 of the application and data server 4006 receives via linkage 5014 a clock signal output from the internal clock 5004 of the product sales system 4050S. Alternatively, the clock signal may be included in the blanking section of the datastream output from the product sales system 4050S and extracted therefrom by the controller 5008. This clock signal may be output continuously or at prescribed intervals by the product sales system 4050S, or may be output in response to a request received from the controller 5008 via linkage 5014.

The controller 5008 compares the received clock signal with a clock signal generated by its own internal clock 5012. If there is a time difference between the two signals, the controller adds or subtracts, as the case may be, the time difference to the start times listed in the received playlist so that the product data is transmitted synchronously with the visual and/or audio data.

By way of example, a playlist includes product reference "3854" for a video of the film "Casablanca" to be advertised between 10.00 and 10.03 on a television shopping channel. If the clock signal received from the product sales system 4050S indicates that the time is 9.57.00, and the clock signal generated by its own internal clock 5012 indicates that the time is 10.00.00, the controller 5008 adds 3 minutes to the start times listed in the playlist. This effectively advances the transmittal of the product data by the application and data server 4006 to the multiplexer and scrambler 2004 by 3 minutes in order to synchronise the product data for the video of "Casablanca" with the visual and/or audio data of the advertisement.

In a second embodiment (not illustrated), the controller 5000 of the product sales system 4050S receives via linkage 5014 a clock signal output from the internal clock 5012 of the controller 5008. This clock signal may be output continuously or at prescribed intervals by the controller 5008, or may be output in response to a request received from the controller 5000 via linkage 5014. The controller 5000 compares the received clock signal with a clock signal generated by its own internal clock 5004.

If there is a time difference between the two signals, the controller adds or subtracts, as the case may be, the time difference to the times at which the visual and/or audio data is to be transmitted. In other words, the controller 5004 may delay or advance the transmittal of the visual and/or audio data to the multiplexer 2004. In the above example, if the clock signal received from the internal clock 5012 indicates that the time is 10.00.00, and the clock signal generated by its own internal clock 5004 indicates that the time is 9.57.00, the controller 5000 subtracts 3 minutes from the time at which the visual and/or audio data for the advertisement of the video for "Casablanca" is to be transmitted. This synchronises the product data for the video of "Casablanca" with the visual and/or audio data of the advertisement.

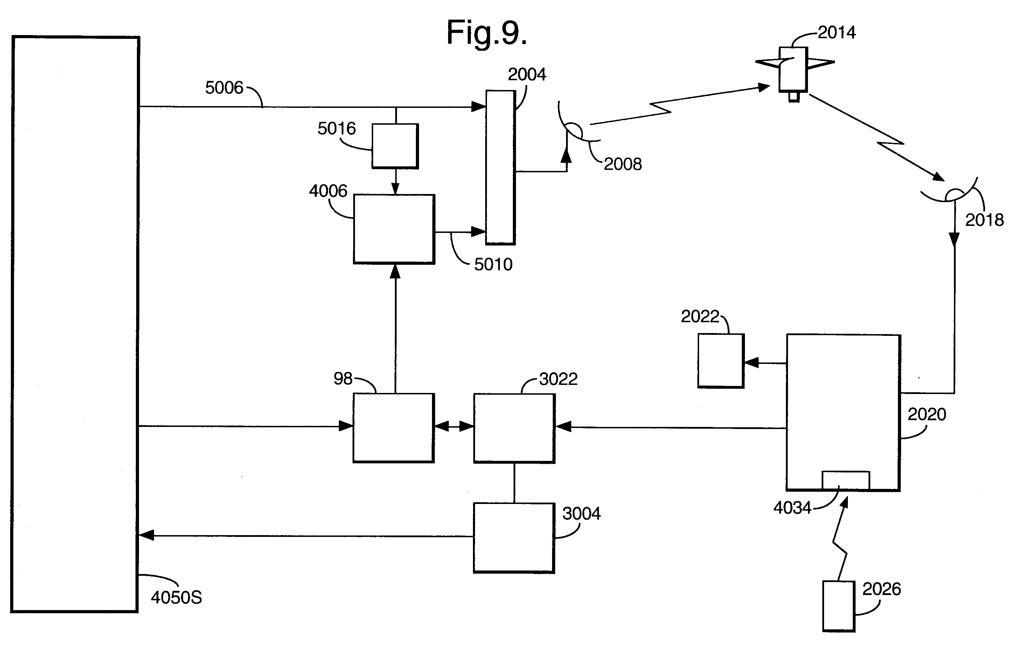

Figure 9 illustrates a third embodiment of the system for synchronising data included in a datastream with visual and/or audio data contained therein.

In this embodiment, the product reference of the product to be advertised in the visual and/or audio data is inserted into the video blanking section of the data generated by the product sales system 4050S. Within the time period in which a particular product is to be advertised, the product reference may be repeatedly inserted into the blanking section with a period typically from 200ms to 5 seconds.

The visual and/or audio data is transmitted to the multiplexer 2004. The application and data server 4006 includes a data extractor 5016 for extracting the product reference from the video sequence. Similar to the first and second embodiments, product data is read from the look-up table in the product management system 98 in response to the product reference contained in the playlist and an MPEG section is generated, typically including the title, description and price of that product, together with a picture ID for the picture showing the product. The thus generated MPEG section is transmitted to the multiplexer and scrambler 2004 via linkage 5010 for reception synchronously with the visual and/or audio data.

This third embodiment has the advantage over the first and second embodiments described above of not requiring controller 5000, controller 5008 or the generation of a playlist.

In a fourth embodiment (not illustrated), the look-up table in the product management system 98 is transmitted to the application and data server 4006 for subsequent transmittal by the transmitter 2008 to the receiver/decoder 2020. The transmitted look-up table is stored in the receiver/decoder 2020. As the look-up table in the product management system is updated, the updated look-up table is transmitted to the server 4006 for transmittal to the receiver/decoder 2020, wherein the previously received look-up table is replaced by the received, updated look-up table.

Similarly to the third embodiment, the product reference of the product to be advertised in visual and/or audio data is inserted into the video blanking section of the data generated by the product sales system 4050S. Within the time period in which a particular product is to be advertised, the product reference may be repeatedly inserted into the blanking section with a period typically from 200ms to 5 seconds.

A data extractor, similar to data extractor 5008, is included in the receiver/decoder 2020. When the receiver/decoder 2020 enters the "shopping mode" in response to a signal received for the remote controller 2026, the product reference is extracted from the received datastream. From the product reference, the corresponding product data is read from the look-up table in the receiver/decoder 2020 and shopping data in the form of an overlay representing the product data is displayed on the screen of the television, as described above.

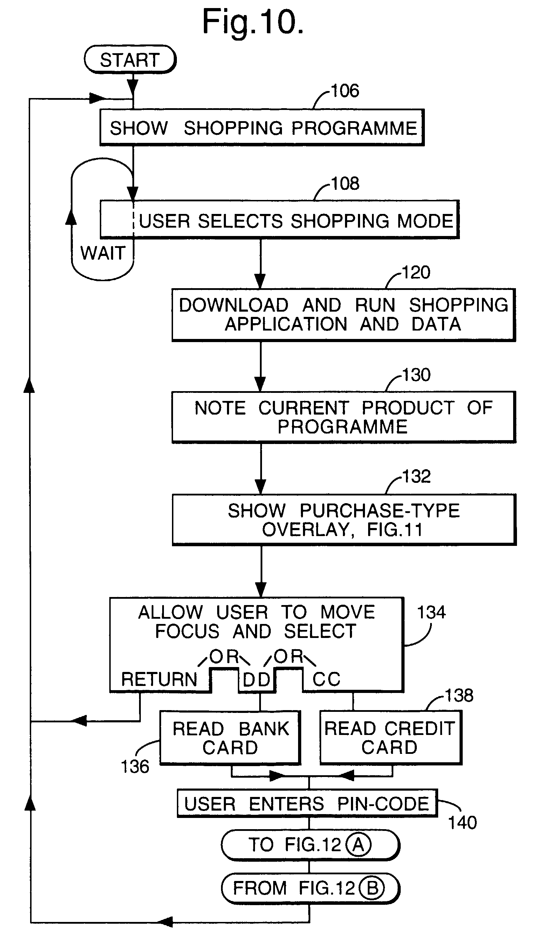

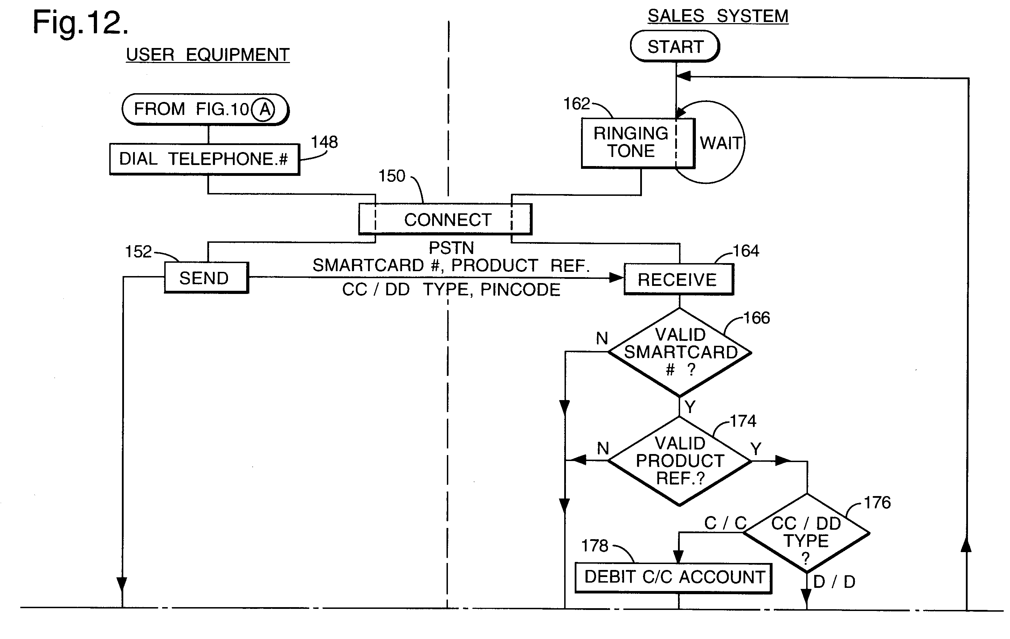

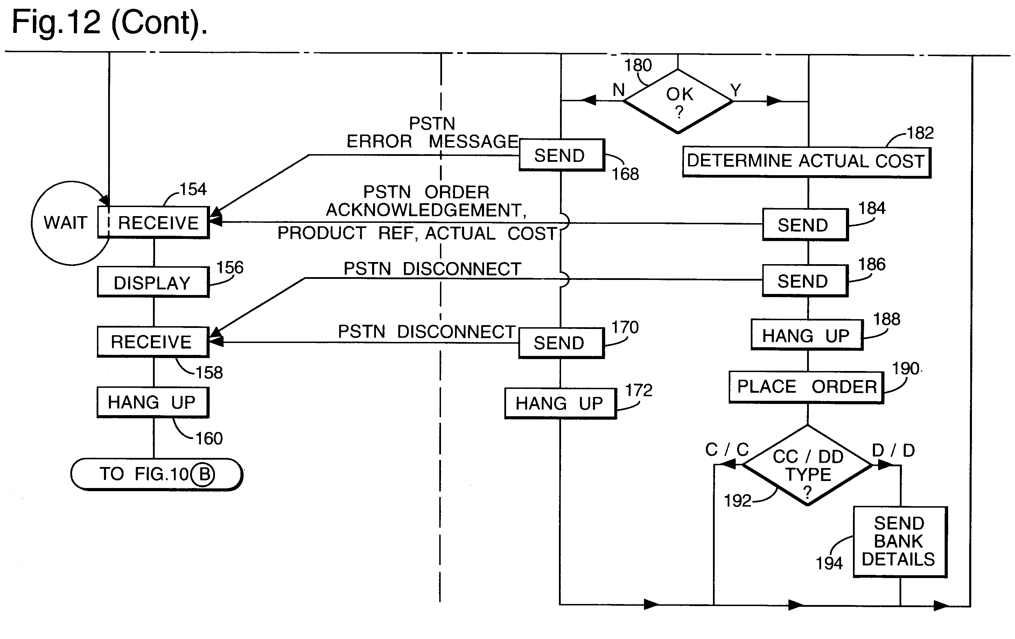

The operation of the system in the shopping mode in all of the above embodiments will now be described with reference to figures 10 to 12. Figure 10 is a flow diagram illustrating operation of the receiver/decoder 2020, whereas figure 12 is a flow diagram which, on the left side, illustrates operation of the receiver/decoder 2020 and, on the right side, illustrates operation of the remainder of the system.

Referring to figure 10, the shopping programme is shown on the television set in step 106. When the shopping mode is selected in step 108 the receiver/decoder 2020 downloads (if necessary) and runs the shopping application and downloads the reference data associated with the product advertised in the television programme in step 120. As described later, this data may be the product reference only or the product data generated using the product reference.

The remaining steps taken by the receiver/decoder 2020 in figures 10 and 12 are caused to occur by the downloaded shopping application. When the user presses one or more appropriate buttons on the remote controller, in step 130 the receiver/decoder 2020 notes the reference data of the product which is currently being advertised in the shopping television programme from the received data.

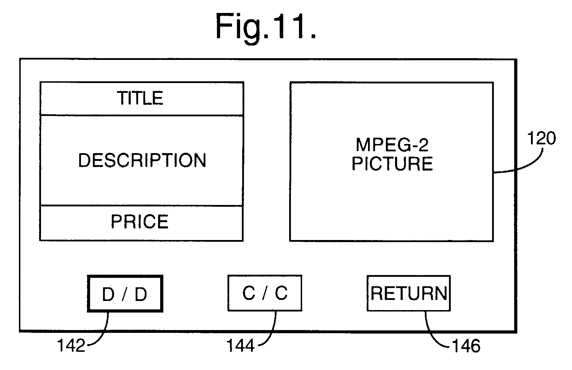

After step 130, in step 132 the receiver/decoder 2020 causes the television 2022 to display a purchase-type overlay as shown in figure 11.

The upper right portion of the overlay typically displays a picture 120 of the product. The upper left portion of the overlay typically displays the title, description and price of the product. The lower portion of the screen includes a "D/D" button 142 to select a purchase with payment by direct debit from a bank account, a "C/C" button 144 to select a purchase with payment using a credit card account, and a button 146 to cancel the purchase operation. One of the buttons has initial focus, which is shown by an emboldened border around that button, and the focus can be changed by pressing the left arrow button or the right arrow button of the remote controller 2026. The currently focused button can then be selected by pressing the "OK" button of the remote controller 2026. In step 134, if the OK button is pressed with the return button in focus, then the process returns to step 108, in which the normal shopping screen of figure 9 is displayed. If the OK button is pressed with the D/D button 142 in focus, then in step 136 the receiver/decoder 2020 reads data from a bank card inserted in one of the card readers 4036 of the receiver/decoder 2020. On the other hand, if the OK button is pressed with the C/C button 144 in focus, then in step 138 the receiver/decoder 2020 reads data from a credit card inserted in one of the card readers 4036 of the receiver/decoder 2020. These processes may include further steps, not shown in figure 8, to prompt the user to insert the appropriate type of card and to return the process to step 108 if an inappropriate type of card is inserted.

In step 140, the receiver/decoder 2020 prompts the user using the television 2022 to insert the appropriate PIN code via the remote controller 2026 for the card which has been inserted into the card reader 4036.

Then, in step 148, the receiver/decoder 2020 causes its modem to dial the telephone number contained in the downloaded data, and in step 150 a PSTN connection is made with the communications server 3022. In step 152, the receiver/decoder 2020 sends a product order in the form of the smartcard number for the user's smartcard which is inserted in the other card reader 4036, the reference data of the product being ordered, the type of payment, that is credit card or direct debit and including an identification of the credit card account or bank account read from the credit card or bank card in step 138 or 136, and the PIN code entered by the user in step 140.

In step 154, the receiver/decoder 2020 waits for a response from the communications server 3022, which may be an error message or an order acknowledgment including the reference data and the actual cost. Whichever type of response is received, it is displayed on the television 2022 in step 156. The receiver/decoder 2020 then receives a disconnect signal from the communications server 3022 in step 158, and then causes its modem to hang up in step 160. The process then returns to step 108.

Referring to the right side of figure 12, the communications server 3022 waits at step 162 for a ringing tone. When received, it makes the PSTN connection 150 mentioned above. The communications server 3022 then receives the product order from the receiver/decoder 2020, as described above with reference to step 152. In step 166, the communications server 3022 checks whether the supplied smartcard number is valid, with reference to the subscriber management system ("SMS") 3004. If invalid, then in step 168, the communications server 3022 sends via the PSTN 12 the error message described with reference to step 154, in step 170 sends the PSTN disconnect signal described with reference to step 158, hangs up its modem in step 172, and then returns to step 162 waiting for another ringing tone.

If the smartcard number is judged to be valid in step 166, then in step 174 the communications server determines with reference to the product management system 98 whether the supplied reference data is valid. If not, then the process proceeds to step 168 described above. However, if the reference data is judged to be valid, then in step 176 the communications server 3022 determines whether the transaction is a C/C transaction or a D/D transaction. If a C/C transaction, then in step 176 the communications server 3022 attempts to debit the user's credit card account with the credit company server 100. If, in step 180, it is determined that the credit card transaction is not successful, then the process proceeds to step 168 described above. However, if the transaction is successful, then the process proceeds to step 182. Also, in step 176, if it is determined that the transaction is a D/D transaction, then the process also proceeds to step 182.

In step 182, the communications server 3022 determines the actual cost of the transaction. This may take into account, for example, discount information for the particular user provided by the SMS 3004. Then, in step 184, the communications server 3022 sends the order acknowledgment described above with reference to step 154. (In figure 12, step 182 is shown as taking place afier step 180 or 176. Alternatively, or more preferably, step 182 may take place immediately before step 176, or immediately afier step 178 and immediately after step 176.)

Afier step 184, in step 186 the communications server 3022 sends the PSTN disconnect signal described above with reference to step 158 and then causes its modem to hang up in step 188. Then, the communications server 3022 places the order via the SMS 3004 with the product sales system 4050S, the SMS 3004 providing additional information to the product sales system 4050S, such as the name, address and delivery instructions for the particular user who has placed the order. The communications server determines in step 192 whether the transaction is a C/C or D/D transaction. If a C/C transaction, then the process proceeds to step 162 to await the next ringing tone. However, if a D/D transaction, before doing this, in step 194, the communications server 3022 sends the details of the bank account to be debited to the product sales system 4050S via the SMS 3004.

Once the product sales system 4050S has received the order, it can then forward the order to an appropriate product supplier 102, and in the case of a D/D transaction it can cause the appropriate bank server 104 to debit the appropriate account.

It will be understood that the present invention has been described above purely by way of example, and modifications of detail can be made within the scope of the invention.

Each feature disclosed in the description, and (where appropriate) the claims and drawings may be provided independently or in any appropriate combination.

In the aforementioned preferred embodiments, certain features of the present invention have been implemented using computer software. However, it will of course be clear to the skilled man that any of these features may be implemented using hardware. Furthermore, it will be readily understood that the functions performed by the hardware, the computer software, and such like are performed on or using electrical and like signals.

## Claims

1. A method of transmitting data to a receiver/decoder, comprising:
transmitting first type visual and/or audio data to the receiver/decoder; and
transmitting second type reference data associated with the first type visual and/or audio data to the receiver/decoder to enable the receiver/decoder to generate further visual and/or audio data in dependence on the reference data;
wherein the first type data and the second type data have a predetermined timing relationship.

2. A method according to Claim 1, wherein the respective start times for transmission of the first and second-type data have the predetermined timing relationship.

3. A method according to Claim 2, wherein the respective start times are the same.

4. A method according to any preceding claim, wherein the first type data represent a product advertisement and the second type data are associated with the product being advertised.

5. A method according to any preceding claim, being further a method of receiving said data, further comprising receiving the first and second type data at the receiver/decoder, and generating the further visual and/or audio data in dependence on the reference data.

6. A method according to Claim 5, wherein the further data are generated in dependence on the reference data using a look-up table stored in the receiver/decoder.

7. A method according to any preceding claim, wherein:
two clock signals is provided;
the first and second type data are transmitted at times determined by respective ones of the clock signals;
the two clock signals are compared; and
at least one of the times is adjusted according to the result of the comparison.

8. A method of transmitting data, comprising:
providing two clock signals;
transmitting first and second type data at times determined by respective ones of the clock signals;
comparing the two clock signals; and
adjusting at least one of the times according to the result of the comparison.

9. A method according to Claim 7 or 8, wherein at least one of the clock signals forms part of its respective type data.

10. A method according to any of Claims 7 to 9, wherein the first type data are transmitted at a plurality of times, and a playlist of the times at which the data are to be transmitted is generated.

11. A method according to Claim 10, wherein the second type data is transmitted in dependence on the times of the playlist and wherein the times on the playlist are adjusted according to the result of the comparison.

12. A method according to any of Claims 1 to 11, wherein the second type data are generated at a different time from the first type data.

13. A method according to any of Claims 1 to 11, wherein the first and second type data are generated at the same time.

14. A method according to any preceding claim, wherein the reference data is supplemented by stored data extracted from a look-up table using the reference data to enable the receiver/decoder to generate the further visual and/or audio data.

15. A method according to Claim 14, wherein the reference data is extracted from the first type visual and/or audio data prior to the extraction of the stored data from the look-up table.

16. A method according to Claim 15, wherein the reference data is extracted from the blanking interval of the first type visual and/or audio data.

17. A method according to any of Claims 14 to 16, wherein the stored data is extracted from a look-up table in a receiver/decoder to enable the receiver/decoder to generate the further visual and/or audio data.

18. Apparatus for transmitting data to a receiver/decoder, comprising:
means for transmitting first type visual and/or audio data to the receiver/decoder and second type reference data associated with the first type visual and/or audio data to the receiver/decoder to enable the receiver/decoder to generate further visual and/or audio data in dependence on the reference data;
wherein the transmitting means are arranged such that the first and second-type data have a predetermined timing relationship.

19. Apparatus according to Claim 18, wherein the transmitting means are arranged so that the respective start times for transmission of the first and second-type data have the predetermined timing relationship.

20. Apparatus according to Claim 19, wherein the respective start times are the same.

21. Apparatus according to any of Claims 18 to 20, wherein the first type data represent a product advertisement and the second type data are associated with the product being advertised.

22. Apparatus according to any of Claims 18 to 21, further comprising:
means for providing two clock signals, the transmitting means being arranged to transmit the first and second type data at times determined by respective ones of the clock signals;
means for comparing the two clock signals; and
means for adjusting at least one of the times according to the result of the comparison.

23. Apparatus for transmitting data, comprising:
means for providing two clock signals;
means for transmitting first and second type data at times determined by respective ones of the clock signals;
means for comparing the two clock signals; and
means for adjusting at least one of the times according to the result of the comparison.

24. Apparatus according to Claim 22 or 23, wherein at least one of the clock signals forms part of its respective type data.

25. Apparatus according to any of Claims 22 to 24, wherein the transmitting means are arranged such that the first type data are transmitted at a plurality of times, and further comprising means for generating a playlist of the times at which the first type data are to be transmitted.

26. Apparatus according to Claim 25, wherein the adjusting means is arranged to adjust the times on the playlist according to the result of the comparison.

27. Apparatus according to any of Claims 19 to 26, further comprising means for extracting the reference data from the first type visual and/or audio data.

28. Apparatus according to Claim 27, wherein said transmitting means comprises means for transmitting said first type data and means for transmitting said second type data and wherein said extracting means is located in said means for transmitting said second type data.

29. Apparatus according to any of Claims 18 to 28, further comprising a look-up table and means for extracting data from the look-up table using the reference data to supplement the reference data to enable the receiver/decoder to generate the further visual and/or audio data.

30. A transmitting and receiving system, comprising apparatus for transmitting data according to any of Claims 18 to 26 and a receiver/decoder comprising means for receiving the first and second type data, and means for generating the further visual and/or audio data in dependence on the reference data.

31. A system according to Claim 30, wherein the generating means is arranged such that the further data are generated in dependence of the reference data using a look-up table stored in the receiver/decoder.

32. A system according to Claim 31, wherein the receiver/decoder further comprises means for extracting data from the look-up table using the received reference data to supplement the reference data to enable the generating means to generate the further visual and/or audio data.

33. A system according to Claim 32, wherein the receiver/decoder further comprises means for extracting the reference data from the first type visual and/or audio data for supply to the data extracting means.
